# FASCICULE DE BREVET EUROPEEN

(11) **EP 3 353 716 B1**
(45) Date de publication et mention de la délivrance du brevet: **23.03.2022**
(21) Numéro de dépôt: 16782013.3
(22) Date de dépôt: 26.09.2016
(51) Int. Cl.: G06K 17/00, H01B 7/36

(54) **SYSTÈME INTÉGRÉ D'IDENTIFICATION DE CÂBLES ET DES PÉRIPHÉRIQUES RACCORDÉS**
INTEGRIERTES SYSTEM ZUR IDENTIFIZIERUNG VON KABELN UND ANGESCHLOSSENEN PERIPHERIEGERÄTEN
INTEGRATED SYSTEM FOR IDENTIFYING CABLES AND CONNECTED PERIPHERALS

(30) Priorité: 24.09.2015 FR 1558991
(43) Date de publication de la demande: 01.08.2018
(73) Titulaire: BULL SAS, 78340 Les Clayes Sous Bois (FR)
(72) Inventeur: POMMIER, Pierre-Laurent, 38120 Saint-Egrève (FR); RADANLIEV, Martin, 38000 Grenoble (FR); ROUX, Julien, 38400 Saint Martin D'hères (FR)
(74) Mandataire: Argyma
(86) Numéro de dépôt international: PCT/EP2016/072853
(87) Numéro de publication internationale: WO 2017/051036

(56) Documents cités:
- CN-U- 204 178 381
- US-A1- 2008 204 235
- US-A1- 2009 272 794
- US-A1- 2009 322 487

## Description

### DOMAINE TECHNIQUE DE L'INVENTION

La présente invention concerne le domaine du câblage permettant la transmission de signaux de communication entre différents types d'équipements et, plus spécifiquement, un système intégré d'identification de câbles et des périphériques raccordés.

### ARRIERE-PLAN TECHNOLOGIQUE DE L'INVENTION

Actuellement il n'est pas toujours aisé d'identifier un câble du fait de nombreuses contraintes comme par exemple, l'accès physique à tout ou partie du câble, la visibilité des extrémités du câble ainsi que son cheminement. En outre, un référencement de câble via un système tiers dégradé (étiquette abimée, base de données inaccessible, ou application nécessitant un matériel spécifique) peut rendre les opérations d'identification complexes, voire impossibles.

Un autre problème concerne les éléments raccordés à chaque extrémité des câbles qui pour les mêmes raisons, que précédemment, ne sont pas toujours identifiables.

La solution la plus couramment répandue à ces problèmes consiste à coller des étiquettes/codes-barres ou autre type de pastilles, afin d'identifier les extrémités d'un câble et ce dernier. Néanmoins, cette solution ne permet pas de modifier une identification déjà donnée, à moins d'enlever le code et de procéder à la génération d'un nouveau code avec les nouvelles informations.

Une autre solution consiste à identifier le branchement des câbles via un testeur, mais elle nécessite le débranchement du câble. Ces techniques sont souvent spécifiques à un type de câble donné.

Il existe une solution par identification visuelle en injectant une source de lumière dans les câbles permettant de voir ou se situe l'autre extrémité. Néanmoins ce genre de solution ne fonctionne que sur des courtes distances et ne donne aucune information sur les éléments branchés aux extrémités ainsi que les informations sur le câble en lui-même.

La demande WO2013164374 enseigne l'utilisation d'une puce intégrée dans un câble entre un premier et un second dispositif dans un système de communication vocale. Néanmoins, ce genre de solution ne donne aucune information sur le câble en lui-même.

Une autre solution consiste en l'utilisation d'un traceur de câble qui injecte un signal (fréquence donnée) dans le câble et un récepteur permet de détecter de manière auditive le signal renvoyé. Là encore ce type de solution comporte de nombreux inconvénients et se limite à un usage très restreint de câble.

Le document CN204178381 U enseigne un dispositif multifonction d'identification de câbles appliqué à un système de conception de la pose de câbles. Le dispositif comprenant une étiquette RFID (identification par radio fréquence) fixée sur le câble à identifier, un lecteur-graveur mobile de type RFID pour lire ou écrire des informations d'identification, dudit câble, contenues dans la puce RFID de l'étiquette et un serveur qui communique via un réseau de communication avec le lecteur-graveur mobile pour gérer les information de paramétrage du câble.

Cependant, un bon paramétrage des informations relatives au câble, nécessite une bonne réception, par l'étiquette, du signal en provenance du lecteur-graveur portable. La solution proposée dans le document CN204178381 U présente l'inconvénient de ne pas tenir compte de ce problème de la qualité du signal.

La demande de brevet américaine US 2009/0272794 A1 décrit également un système d'identification de câbles, ce système est basé sur une pluralité d'étiquettes RFID disposées le long du câble.

### DESCRIPTION GENERALE DE L'INVENTION

La présente invention a pour but de pallier certains inconvénients de l'art antérieur concernant l'identification de câbles.

Ce but est atteint par un système intégré d'identification de câble et des périphériques raccordés comprenant au moins un câble pourvu d'au moins un connecteur, au moins une puce électronique associée à un arrangement d'alimentation, cette puce comportant au moins un module de communication avec un terminal, une mémoire dans laquelle sont enregistrées des données, données d'identification du câble, et au moins un identifiant, ledit système étant caractérisé en ce qu'il comporte au moins une antenne disposée le long du câble et s'étendant sur toute la longueur du câble à identifier, ladite antenne étant reliée à la puce pour permettre la communication de données entre ladite puce électronique et le terminal de communication via l'activation d'un programme de gestion, contenu dans ladite puce.

Selon une autre particularité, le programme de gestion de la puce électronique permet:
- de recevoir les données d'identification (4) du câble (1) d'un dispositif de programmation (6) lors de la fabrication du câble (1),
- de modifier des informations contenues dans les instructions reçues du terminal (5),
- d'envoyer les données requises en lecture par le terminal de communication (5),
- d'autoriser les écritures après réussite de la comparaison d'identifiants.

Selon une autre particularité, les données d'identification du câble à identifier contiennent au moins les caractéristiques du câble à identifier et/ou des champs personnalisables.

Selon une autre particularité, une des caractéristiques du câble à identifier est au moins :
- la marque du câble
- le modèle du câble ;
- le numéro de série du câble ;
- la longueur du câble ;
- le type de connecteur situé sur une extrémité du câble ;
- le type de connecteur situé sur l'autre extrémité du câble.

Selon une autre particularité, un des champs personnalisables est au moins :
- un champ utilisateur personnalisable contenant le nom de l'utilisateur ou le nom de l'entreprise;
- un champ personnalisable contenant le nom de l'équipement connecté sur une extrémité ;
- un champ personnalisable contenant le nom de l'équipement connecté sur l'autre extrémité.

Selon une autre particularité:
- les caractéristiques du câble sont écrites en mémoire de la puce avec une information exploitable par le programme de gestion indiquant qu'elles sont en lecture seule ;
- les champs personnalisables sont écrits en mémoire de la puce avec une information exploitable par le programme de gestion indiquant qu'ils sont en lecture et écriture.

Selon une autre particularité, le module de communication est un module RFID.

Selon une autre particularité, l'arrangement d'alimentation s'effectue au moyen de l'antenne.

Selon une autre particularité, le terminal de communication comprend au moins un module de communication RFID.

Un autre but est de proposer un câble permettant la réalisation d'un système selon l'invention.

Ce but est atteint par un câble selon la revendication 10.

Selon une autre particularité, la puce électronique est intégrée dans le câble.

Selon une autre particularité, la puce électronique est intégrée dans au moins un des connecteurs.

Selon une autre particularité, le dispositif de programmation comprend au moins un moyen pour l'écriture en mémoire de la puce électronique de l'identifiant de ladite puce et des caractéristiques du câble et au moins un programme permettant de :
- configurer les données d'identification puis d'envoyer à la puce électronique ces données en association avec un ordre d'écriture;
- allouer un identifiant à la puce électronique puis envoyer à la puce électronique cet identifiant avec un ordre d'écriture.

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels :

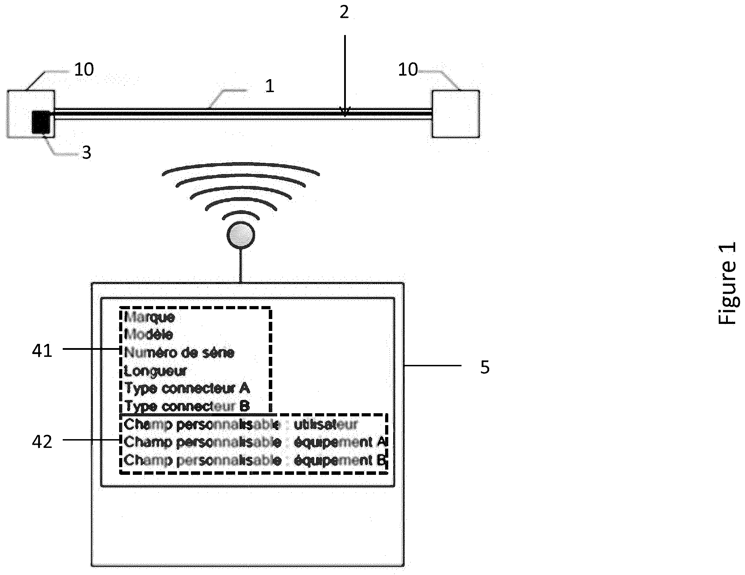

- la figure 1 représente un schéma du fonctionnement du système selon un premier mode de réalisation,

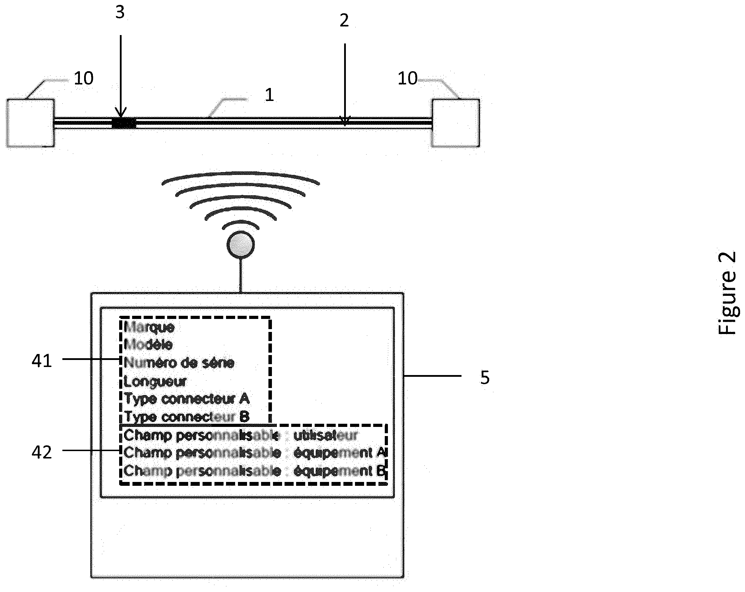

- la figure 2 représente un schéma du fonctionnement du système selon un second mode de réalisation,

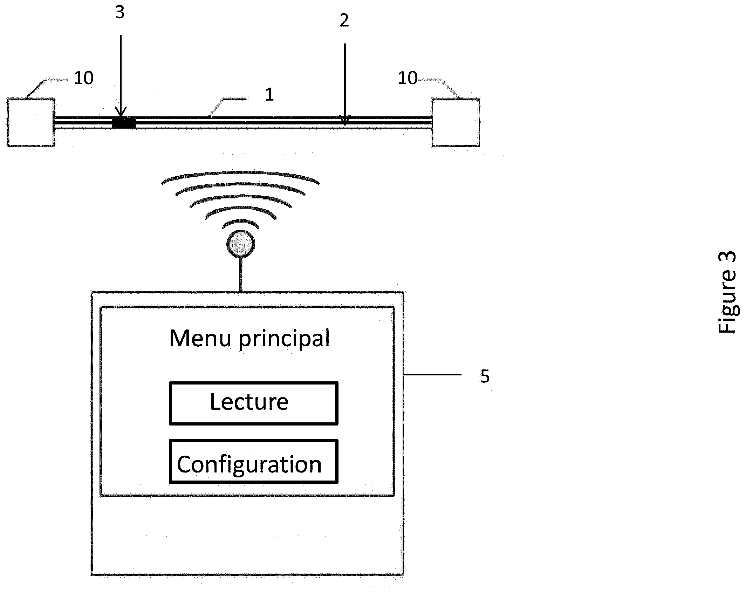

- la figure 3 représente un schéma du fonctionnement du menu terminal selon un mode de réalisation

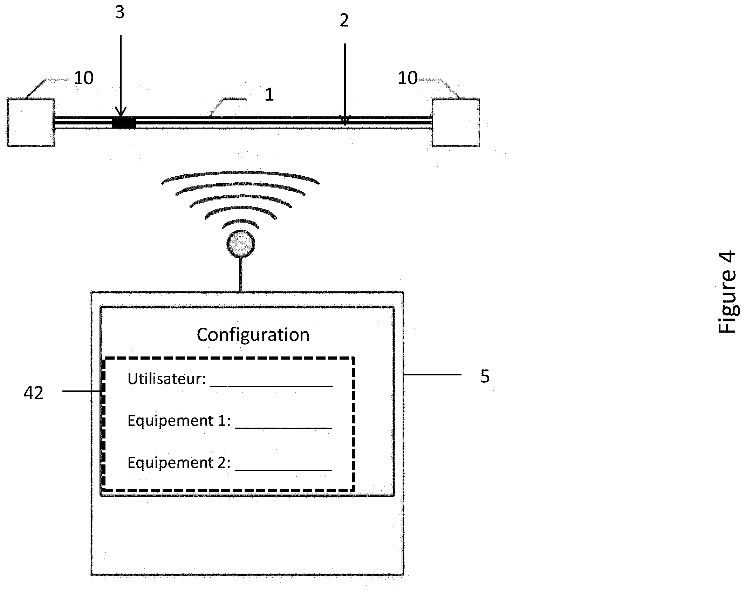

- la figure 4 représente un schéma du fonctionnement de la configuration des champs personnalisables de la puce électronique par le terminal selon un mode de réalisation,

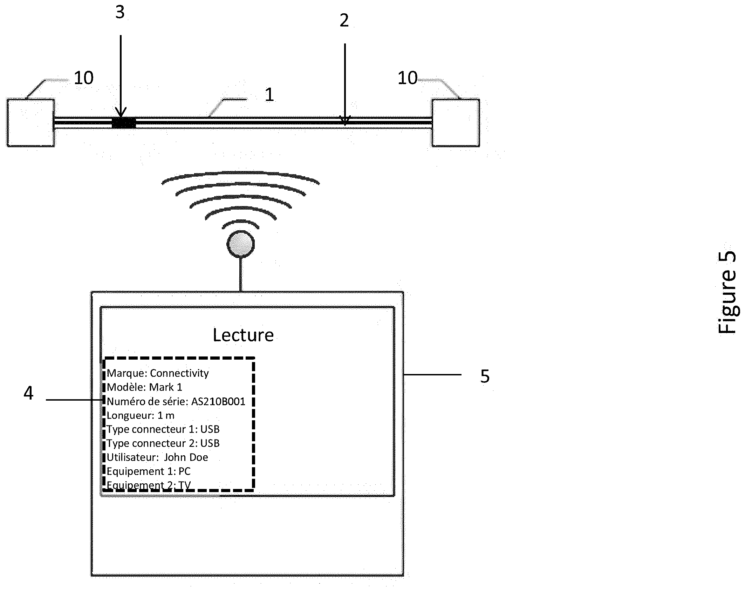

- la figure 5 représente un schéma du fonctionnement de la lecture de données par le terminal selon un mode de réalisation,

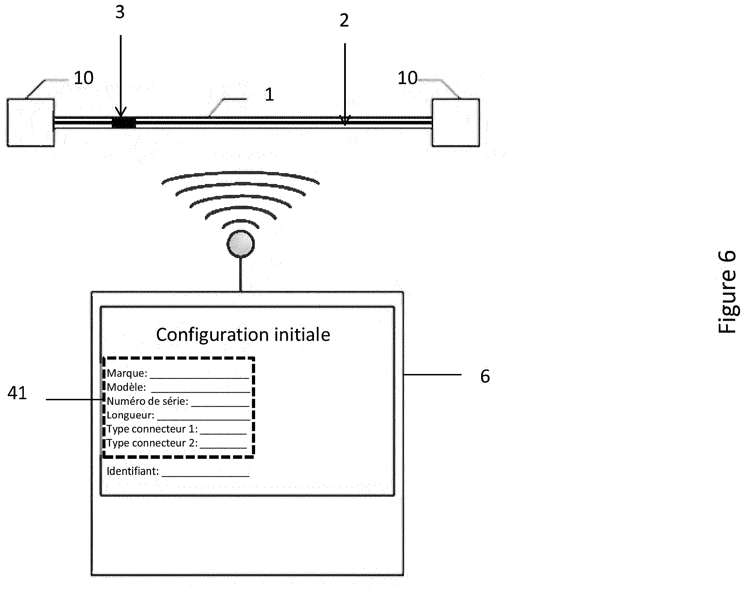

- la figure 6 représente un schéma du fonctionnement de la configuration initiale de la puce par le dispositif de programmation selon un mode de réalisation.

### DESCRIPTION DES MODES DE REALISATION PREFERES DE L'INVENTION

La présente invention concerne un système intégré pour l'identifier des câbles et des périphériques raccordés.

Dans certains modes de réalisation, le système intégré d'identification de câbles et des périphériques raccordés comprend au moins un câble (1) pourvu d'au moins un connecteur (10), au moins une puce électronique (3) associée à un arrangement d'alimentation, cette puce (3) comportant au moins un module de communication avec un terminal (5), au moins une mémoire dans laquelle sont enregistrées des données, données d'identification (4) du câble (1), et au moins un identifiant, ledit système étant caractérisé en ce qu'il comporte au moins une antenne (2) disposée le long du câble (1) et s'étendant sur au moins une partie du câble (1) à identifier, ladite antenne (2) étant relié à la puce (3) pour permettre la communication de données entre ladite puce électronique (3) et le terminal de communication (5) via l'activation d'un programme de gestion, contenu dans ladite puce (3).

Cette solution permet en outre de répondre au problème de la qualité du signal. En effet, la bonne réception, par la puce électronique (3), du signal en provenance du terminal de communication (5), dépend en général de la surface balayée par ledit signal émis par ledit terminal de communication (5). L'utilisation d'une antenne disposée le long du câble, notamment en parcourant au moins une partie de ce dernier, par exemple selon un trajet parallèle ou enroulé autour du câble, permet d'étendre les capacités de réception de la puce électronique. Il est donc tiré avantage du fait que la puce électronique (3) équipe un câble, dont la longueur est avantageusement utilisée pour étendre l'antenne à laquelle est reliée la puce électronique sans fragiliser l'ensemble. La présence d'une antenne (2) disposée le long du câble (1) permet, d'une part, d'assurer la bonne réception des informations par la puce électronique lorsqu'un signal est transmis depuis le terminal de communication (5) en direction de la dite puce électronique (3) et, d'autre part, d'assurer la réception des informations ou la lecture de celles-ci quelque soit l'emplacement de la puce sur le câble. Par exemple et de manière non limitative, si un agent en charge de la gestion d'un réseau de câbles doit identifier un câble au moyen du terminal de communication, il n'a pas nécessairement besoin de le positionner exactement à l'emplacement de la puce électronique. Il suffira, en effet, à l'agent de positionner le terminal de communication (5) en direction d'une zone du câble (1) où au moins une portion de l'antenne (2) est présente. Cette approche permet ainsi d'alléger la logistique mise en œuvre pour la gestion du réseau de câbles.

Dans certains modes de réalisation, ladite antenne (2) s'étend sur toute la longueur du câble (1).

Dans certains modes de réalisation, des données, dites données d'identification (4) du câble (1), et au moins un identifiant sont enregistrés dans la mémoire de la puce électronique (3). Lesdites données d'identification (4) contiennent au moins les éléments suivants :
- les caractéristiques du câble (41) à identifier contenant au moins un des éléments suivant:
   - la marque du câble (1) ;
   - le modèle du câble (1);
   - le numéro de série du câble (1);
   - la longueur du câble (1);
   - le type de connecteur situé sur une extrémité du câble (1):
   - le type de connecteur situé sur l'autre extrémité du câble (1);
- les champs personnalisables (42) contenant au moins un des éléments suivant :
   - un champ utilisateur personnalisable contenant le nom de l'utilisateur ou le nom de l'entreprise ;
   - un champ personnalisable contenant le nom de l'équipement connecté sur une extrémité;
   - un champ personnalisable contenant le nom de l'équipement connecté sur l'autre extrémité.

Les caractéristiques du câble (41) à identifier sont écrites en mémoire de la puce électronique (3) avec une information, exploitable par le programme de gestion de ladite puce, indiquant qu'elles sont en lecture seule. Quant aux champs personnalisables (42), ils sont écrits en mémoire de la puce électronique (3) avec une information, également exploitable par le programme de gestion de la puce, indiquant qu'ils sont en lecture et écriture. Lesdits champs (42) sont ainsi modifiables par l'utilisateur lors du balayage par le terminal de communication (5) sur la puce électronique (3). L'information exploitable par le programme de gestion peut être de type « drapeau » (pour flag en anglais) ayant une valeur «r» (pour read en anglais) pour la lecture seule et «rw» (pour read-write en anglais) pour la lecture et l'écriture.

Dans certains modes de réalisation, le programme de gestion de la puce électronique permet:
- de recevoir les données d'identification (4) du câble (1) d'un dispositif de programmation (6) lors de la fabrication du câble (1),
- de modifier les champs personnalisables (42) à partir des informations contenues dans les instructions reçues du terminal (5),
- d'envoyer les données requises en lecture par le terminal de communication (5),
- d'autoriser les écritures après réussite de la comparaison d'identifiants.

Dans certains modes de réalisation, la puce électronique (3) comporte, de préférence, au moins un module de communication RFID (identification par radiofréquence) afin de permettre audit système d'identification d'être compatible avec un terminal de communication (5) utilisant la technologie RFID. Cette dernière utilise les ondes radio pour identifier automatiquement des objets par exemple.

Dans certains modes de réalisation, la puce électronique (3) est intégrée dans le câble (1).

Dans certains modes de réalisation, la puce électronique (3) est intégrée dans au moins un des connecteurs (10).

Dans certains modes de réalisation, la puce électronique (3) est associée à un arrangement d'alimentation. Dans certains modes de réalisation, l'alimentation s'effectue au moyen de ladite antenne (2). L'énergie est fournie par l'onde (magnétique ou électromagnétique) issue de l'interrogateur (terminal (5) et antenne (2)) pour alimenter la puce électronique (3).

Dans certains modes de réalisation, le terminal de communication (5) comprend au moins un module de communication, de préférence de type NFC (communication par champ proche) ou RFID, relié à une antenne pour permettre la communication de données entre ledit terminal de communication (5) et la puce électronique (3). Par communication de données, on entend par exemple et de manière non limitative, toute lecture ou écriture de données de ladite puce électronique (3) par ledit terminal de communication (5).

Le terminal de communication (5) comprend, en outre, un programme permettant de réaliser au moins une des actions suivantes:
- envoi d'une interrogation à la puce électronique (3),
- attente de la réponse de la puce électronique (3),
- réception de la réponse de la puce électronique (3),
- mémorisation des différents champs du message reçu,
- présentation des champs à l'affichage,

Dans certains modes de réalisation, ledit programme du terminal de communication (5) avec la puce (3) permet de configurer les champs personnalisables (42) en envoyant des commandes d'écriture dans la puce (3) des informations associées à l'identification des champs à personnaliser. Un utilisateur peut ainsi lire, via le programme, les données d'identification (4) du câble (1) contenues sur la puce électronique (3). L'utilisateur peut également configurer les champs personnalisables (42) dès que le terminal de communication (5) est à portée du câble (1) et dès que la puce électronique (3) a reconnu l'identifiant du câble (1) comme étant correct.

Ledit terminal de communication (5) comporte au moins une interface Homme-Machine. Par le vocable interface homme-machine, on entend tout élément permettant à un être humain de dialoguer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel. Un deuxième exemple de réalisation est l'utilisation d'une caméra enregistrant les déplacements de l'œil de l'utilisateur et utilisant ces informations pour mettre en surbrillance l'élément pointé par l'œil de l'utilisateur et un mouvement supplémentaire de l'œil ou de la tête ou d'une partie du corps ou un actionnement d'une touche, ou l'effleurement d'une zone de l'écran validant la sélection ainsi faite. Un autre exemple d'interface homme-machine peut être une commande vocale permettant d'afficher des éléments et ensuite de valider la sélection d'un élément. Ces exemples étant purement illustratifs mais non limitatifs sur les solutions possibles pour sélectionner des éléments et les déclarer au module d'activation et de liaison pour que ce dernier remplisse sa tâche.

Dans certains modes de réalisation, le terminal de communication(5) avec la puce (3) comprend des moyens, par exemple et de manière non limitative un clavier virtuel ou un clavier réel d'une interface Homme-Machine, permettant à l'utilisateur de rentrer des informations en association avec le champ à personnaliser. De préférence, ledit terminal de communication (5) est un smartphone ou une tablette.

Dans certains modes de réalisation, le dispositif de programmation (6) du câble (1) comprend un moyen pour écrire en mémoire de la puce (3), les caractéristiques du câble (1) et l'identifiant de la puce (3).

Le dispositif de programmation (6) est utilisé après la pose de la puce électronique (3) sur le câble (1) afin d'effectuer la configuration initiale de la puce (3). Ledit dispositif de programmation (6) installe, par exemple et de manière non limitative, le programme de gestion sur la puce électronique (3).

Dans certains modes de réalisation, le dispositif de programmation (6) comprend un programme permettant de :
- configurer les données d'identification (4) puis d'envoyer à la puce électronique (3) ces données en association avec un ordre d'écriture;
- allouer un identifiant à la puce électronique (3) puis envoyer à la puce électronique (3) cet identifiant avec un ordre d'écriture.

La fabrication du système intégré d'identification de câbles et des périphériques raccordés commence par l'installation de la puce électronique (3) et de l'antenne (2) sur le câble (1), puis la puce électronique (3) est programmée lors de la configuration initiale par un dispositif de programmation (6) afin de recevoir les caractéristiques (41) du câble (1) ainsi qu'un identifiant. Afin de finir la fabrication, l'utilisateur balaye le câble (1) avec le terminal de communication (5) qui possède la liste des identifiants des puces électroniques qui lui sont associés, attend la réponse de la puce (3) à la demande d'identification du terminal de communication (5), lit les données enregistrées sur la puce (3) ou configure les champs personnalisables (42).

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système intégré d'identification de câble et des périphériques raccordés comprenant au moins un câble (1) pourvu d'au moins un connecteur (10), au moins une puce électronique (3) associée à un arrangement d'alimentation, cette puce (3) comportant au moins un module de communication avec un terminal (5), une mémoire dans laquelle sont enregistrées des données, données d'identification (4) du câble (1), et au moins un identifiant, ledit système étant **caractérisé en ce qu'**il comporte au moins une antenne (2) disposée le long du câble (1) et s'étendant sur toute la longueur du câble (1) à identifier, ladite antenne (2) étant reliée à la puce (3) pour permettre la communication de données entre ladite puce électronique (3) et le terminal de communication (5) via l'activation d'un programme de gestion, contenu dans ladite puce (3).

2. Système intégré d'identification de câbles et des périphériques raccordés selon la revendication 1 **caractérisé en ce que** le programme de gestion de la puce électronique permet:
• de recevoir les données d'identification (4) du câble (1) d'un dispositif de programmation (6) lors de la fabrication du câble (1),
• de modifier des champs personnalisables (42) à partir des informations contenues dans les instructions reçues du terminal (5),
• d'envoyer les données requises en lecture par le terminal de communication (5),
• d'autoriser les écritures après réussite de la comparaison d'identifiants.

3. Système intégré d'identification de câbles et des périphériques raccordés selon la revendication 1 **caractérisé en ce que** les données d'identification du câble à identifier contiennent au moins les caractéristiques du câble (41) à identifier et/ou des champs personnalisables (42).

4. Système intégré d'identification de câbles et des périphériques raccordés selon la revendication 3 prise en combinaison avec l'une des revendications 1 à 2 **caractérisé en ce qu'**une des caractéristiques du câble (41) à identifier est au moins :
• la marque du câble ;
• le modèle du câble ;
• le numéro de série du câble ;
• la longueur du câble ;
• le type de connecteur situé sur une extrémité du câble ;
• le type de connecteur situé sur l'autre extrémité du câble.

5. Système intégré d'identification de câbles et des périphériques raccordés selon l'une des revendications 2 et 3 **caractérisé en ce qu'**un des champs personnalisables (42) est au moins :
• un champ utilisateur personnalisable contenant le nom de l'utilisateur ou le nom de l'entreprise;
• un champ personnalisable contenant le nom de l'équipement connecté sur une extrémité ;
• un champ personnalisable contenant le nom de l'équipement connecté sur l'autre extrémité ;

6. Système intégré d'identification de câbles et des périphériques raccordés selon la revendication 3 prise ou non en combinaison avec l'une des revendications 1 à 2 **caractérisé en ce que** :
• les caractéristiques du câble (41) sont écrites en mémoire de la puce (3) avec une information exploitable par le programme de gestion indiquant qu'elles sont en lecture seule ;
• les champs personnalisables (42) sont écrits en mémoire de la puce (3) avec une information exploitable par le programme de gestion indiquant qu'ils sont en lecture et écriture.

7. Système intégré d'identification de câbles et des périphériques raccordés selon une des revendications 1 à 5 **caractérisé en ce que** le module de communication de la puce électronique (3) est un module RFID.

8. Système intégré d'identification de câbles et des périphériques raccordés selon une des revendications 1 à 6 caractérisé en ce l'arrangement d'alimentation s'effectue au moyen de l'antenne (2).

9. Système intégré d'identification de câbles et des périphériques raccordés selon la revendication 1, **caractérisé en ce que** le terminal de communication (5) comprend au moins un module de communication RFID.

10. Câble comprenant au moins un connecteur et au moins une puce électronique (3) associée à un arrangement d'alimentation, cette puce (3) comportant au moins un module de communication avec un terminal (5), une mémoire dans laquelle sont enregistrées des données, données d'identification (4) du câble (1), et au moins un identifiant, ledit câble étant **caractérisé en ce qu'**il comporte au moins une antenne (2) disposée le long du câble (1) et s'étendant sur toute la longueur du câble (1) à identifier, ladite antenne (2) étant reliée à la puce (3) pour permettre la communication de données entre ladite puce électronique (3) et le terminal de communication (5) via l'activation d'un programme de gestion, contenu dans ladite puce (3).

11. Câble selon la revendication 10 **caractérisé en ce que** la puce électronique (3) est intégrée dans le câble (1).

12. Câble selon la revendications 10 **caractérisé en ce que** la puce électronique (3) est intégrée dans au moins un des connecteurs (10).

13. Système intégré d'identification de câbles et des périphériques raccordés selon la revendication 2, **caractérisé en ce que** le dispositif de programmation (6) comprend au moins un moyen pour l'écriture en mémoire de la puce électronique (3) de l'identifiant de ladite puce (3) et des caractéristiques du câble (1) et au moins un programme permettant de :
• configurer les données d'identification (4) puis d'envoyer à la puce électronique (3) ces données en association avec un ordre d'écriture;
• allouer un identifiant à la puce électronique (3) puis envoyer à la puce électronique (3) cet identifiant avec un ordre d'écriture.

## Patentansprüche

1. Integriertes System zur Identifizierung von Kabeln und angeschlossenen Peripheriegeräten, umfassend mindestens ein Kabel (1), das mit mindestens einem Stecker (10) versehen ist, mindestens einen elektronischen Chip (3), der mit einer Stromversorgungsanordnung in Beziehung steht, wobei dieser Chip (3) mindestens ein Kommunikationsmodul mit einem Terminal (5) aufweist, einen Speicher, in dem Daten, Identifikationsdaten (4) des Kabels (1) und mindestens eine Kennung, gespeichert sind, wobei das System **dadurch gekennzeichnet ist, dass** es mindestens eine Antenne (2) aufweist, die entlang des Kabels (1) angeordnet ist und sich über die gesamte Länge des zu identifizierenden Kabels (1) erstreckt, wobei die Antenne (2) mit dem Chip (3) verbunden ist, um die Datenkommunikation zwischen dem elektronischen Chip (3) und dem Kommunikationsterminal (5) über die Aktivierung eines Verwaltungsprogramms, das in dem Chip (3) enthalten ist, zu ermöglichen.

2. Integriertes System zur Identifizierung von Kabeln und angeschlossenen Peripheriegeräten nach Anspruch 1, **dadurch gekennzeichnet, dass** das Programm zur Verwaltung des elektronischen Chips Folgendes ermöglicht:
• Empfangen von Identifikationsdaten (4) des Kabels (1) von einer Programmiervorrichtung (6) bei der Herstellung des Kabels (1),
• Modifizieren anpassbarer Felder (42) anhand von Informationen, die in den vom Terminal (5) empfangenen Anweisungen enthalten sind,
• Senden der erforderlichen Daten im Lesemodus durch das Kommunikationsterminal (5),
• Autorisieren von Schreibvorgängen nach einem erfolgreichem Vergleich von Kennungen.

3. Integriertes System zur Identifizierung von Kabeln und angeschlossenen Peripheriegeräten nach Anspruch 1, **dadurch gekennzeichnet, dass** die Identifikationsdaten des zu identifizierenden Kabels mindestens die Merkmale des zu identifizierenden Kabels (41) und/oder anpassbare Felder (42) enthalten.

4. Integriertes System zur Identifizierung von Kabeln und angeschlossenen Peripheriegeräten nach Anspruch 3 in Kombination mit einem der Ansprüche 1 bis 2, **dadurch gekennzeichnet, dass** eines der Merkmale des zu identifizierenden Kabels (41) mindestens Folgendes ist:
• die Marke des Kabels;
• das Modell des Kabels;
• die Seriennummer des Kabels;
• die Länge des Kabels;
• der Typ des Steckers, der sich an einem Ende des Kabels befindet;
• der Typ des Steckers, der sich an dem anderen Ende des Kabels befindet.

5. Integriertes System zur Identifizierung von Kabeln und angeschlossenen Peripheriegeräten nach einem der Ansprüche 2 und 3, **dadurch gekennzeichnet, dass** eines der anpassbaren Felder (42) mindestens Folgendes ist:
• ein anpassbares Benutzerfeld, das den Namen des Benutzers oder den Namen des Unternehmens enthält;
• ein anpassbares Feld, das den Namen des Geräts enthält, das an einem Ende angeschlossen ist;
• ein anpassbares Feld, das den Namen des Geräts enthält, das an dem anderen Ende angeschlossen ist;

6. Integriertes System zur Identifizierung von Kabeln und angeschlossenen Peripheriegeräten nach Anspruch 3, in Kombination oder nicht in Kombination mit einem der Ansprüche 1 bis 2, **dadurch gekennzeichnet, dass:**
• die Merkmale des Kabels (41) mit einer durch das Verwaltungsprogramm auswertbaren Information, die angibt, dass sie nur gelesen werden können, in den Speicher des Chips (3) geschrieben werden;
• die anpassbaren Felder (42) mit einer durch das Verwaltungsprogramm auswertbaren Information, die angibt, dass sie gelesen und geschrieben werden können, in den Speicher des Chips (3) geschrieben werden.

7. Integriertes System zur Identifizierung von Kabeln und angeschlossenen Peripheriegeräten nach einem der Ansprüche 1 bis 5, **dadurch gekennzeichnet, dass** das Kommunikationsmodul des elektronischen Chips (3) ein RFID-Modul ist.

8. Integriertes System zur Identifizierung von Kabeln und angeschlossenen Peripheriegeräten nach einem der Ansprüche 1 bis 6, **dadurch gekennzeichnet, dass** die Stromversorgungsanordung mittels einer Antenne (2) erfolgt.

9. Integriertes System zur Identifizierung von Kabeln und angeschlossenen Geräten nach Anspruch 1, **dadurch gekennzeichnet, dass** das Kommunikationsterminal (5) mindestens ein RFID-Kommunikationsmodul umfasst.

10. Kabel, umfassend mindestens einen Stecker und mindestens einen elektronischen Chip (3), der mit einer Stromversorgungsanordnung in Beziehung steht, wobei dieser Chip (3) mindestens ein Kommunikationsmodul mit einem Terminal (5) aufweist, einen Speicher, in dem Daten, Identifikationsdaten (4) des Kabels (1) und mindestens eine Kennung gespeichert sind, wobei das Kabel **dadurch gekennzeichnet ist, dass** es mindestens eine Antenne (2) aufweist, die entlang des Kabels (1) angeordnet ist und sich über die gesamte Länge des zu identifizierenden Kabels (1) erstreckt, wobei die Antenne (2) mit dem Chip (3) verbunden ist, um die Datenkommunikation zwischen dem elektronischen Chip (3) und dem Kommunikationsterminal (5) über die Aktivierung eines Verwaltungsprogramms, das in dem Chip (3) enthalten ist, zu ermöglichen.

11. Kabel nach Anspruch 10, **dadurch gekennzeichnet, dass** der elektronische Chip (3) in das Kabel (1) integriert ist.

12. Kabel nach Anspruch 10, **dadurch gekennzeichnet, dass** der elektronische Chip (3) in mindestens einen der Stecker (10) integriert ist.

13. Integriertes System zur Identifizierung von Kabeln und angeschlossenen Peripheriegeräten nach Anspruch 2, **dadurch gekennzeichnet, dass** die Programmiervorrichtung (6) mindestens ein Mittel zum Schreiben der Kennung des Chips (3) und der Merkmale des Kabels (1) in den Speicher des elektronischen Chips (3) und mindestens ein Programm umfasst, das Folgendes ermöglicht:
• Konfigurieren der Identifikationsdaten (4) und anschließendes Senden dieser Daten an den elektronischen Chip (3) in Verbindung mit einem Schreibbefehl;
• Zuweisen einer Kennung an den elektronischen Chip (3) und anschließendes Senden dieser Kennung an den elektronischen Chip (3) mit einem Schreibbefehl.

## Claims

1. An integrated system for identifying a cable and connected peripherals comprising at least one cable (1) provided with at least one connector (10), at least one electronic chip (3) associated with a power supply arrangement, this chip (3) having at least one module for communicating with a terminal (5), a memory in which data, identification data (4) of the cable (1), and at least one identifier, are stored, said system being **characterized in that it** has at least one antenna (2) arranged along the cable (1) and extending over the entire length of the cable (1) to be identified, said antenna (2) being connected to the chip (3) in order to allow data communication between said electronic chip (3) and the communication terminal (5) via the activation of a management program, contained in said chip (3).

2. The integrated system for identifying cables and connected peripherals according to claim 1 **characterized in that** the management program of the electronic chip makes it possible:
• to receive the identification data (4) of the cable (1) from a programming device (6) during the manufacture of the cable (1),
• to modify customizable fields (42) from information contained in the instructions received from the terminal (5),
• to send the required data to be read by the communication terminal (5),
• to authorize writing after successful comparison of identifiers.

3. The integrated system for identifying cables and connected peripherals according to claim 1 **characterized in that** the identification data of the cable to be identified contain at least the characteristics of the cable (41) to be identified and/or of the customizable fields (42).

4. The integrated system for identifying cables and connected peripherals according to claim 3 taken in combination with one of claims 1 to 2 **characterized in that one** of the characteristics of the cable (41) to be identified is at least:
• the make of the cable;
• the model of the cable;
• the serial number of the cable;
• the length of the cable;
• the type of connector located at one end of the cable;
• the type of connector located at the other end of the cable.

5. The integrated system for identifying cables and connected peripherals according to one of claims 2 and 3 **characterized in that one** of the customizable fields (42) is at least:
• a customizable user field containing the user's name or the company's name;
• a customizable field containing the name of the device connected on one end;
• a customizable field containing the name of the device connected on the other end;

6. The integrated system for identifying cables and connected peripherals according to claim 3 optionally taken in combination with one of claims 1 or 2 **characterized in that:**
• the characteristics of the cable (41) are written to the memory of the chip (3) with information that can be used by the management program indicating that they are read-only;
• the customizable fields (42) are written to the memory of the chip (3) with information that can be used by the management program indicating that they are read/write.

7. The integrated system for identifying cables and connected peripherals according to one of claims 1 to 5 **characterized in that** the communication module of the electronic chip (3) is an RFID module.

8. The integrated system for identifying cables and connected peripherals according to one of claims 1 to 6 **characterized in that** the power supply arrangement is made by means of the antenna (2).

9. The integrated system for identifying cables and connected peripherals according to claim 1, **characterized in that** the communication terminal (5) comprises at least one RFID communication module.

10. A cable comprising at least one connector and at least one electronic chip (3) associated with a power supply arrangement, this chip (3) having at least one module for communicating with a terminal (5), a memory in which data, identification data (4) of the cable (1), and at least one identifier, are stored, said cable being **characterized in that it** has at least one antenna (2) arranged along the cable (1) and extending over the entire length of the cable (1) to be identified, said antenna (2) being connected to the chip (3) in order to allow data communication between said electronic chip (3) and the communication terminal (5) via the activation of a management program, contained in said chip (3).

11. The cable according to claim 10 **characterized in that** the electronic chip (3) is integrated in the cable (1).

12. The cable according to claim 10 **characterized in that** the electronic chip (3) is integrated in at least one of the connectors (10).

13. The integrated system for identifying cables and connected peripherals according to claim 2, **characterized in that** the programming device (6) comprises at least one means for writing the identifier of said chip (3) and the characteristics of the cable (1) to the memory of the electronic chip (3) and at least one program making it possible to:
• configure the identification data (4) and then send these data to the electronic chip (3) in association with a write order;
• allocate an identifier to the electronic chip (3) and then send this identifier to the electronic chip (3) with a write order.
